# EUROPÄISCHE PATENTSCHRIFT

(11) **EP 0 571 644 B1**
(45) Veröffentlichungstag und Bekanntmachung des Hinweises auf die Patenterteilung: **27.03.1996**
(21) Anmeldenummer: 92108539.5
(22) Anmeldetag: 20.05.1992
(51) Int. Cl.: H02J 3/18, H02H 7/16

(54) **Verfahren und Vorrichtung zur Entlastung eines Kondensators eines gesteuerten Serienkompensators in Abhängigkeit der Belastung seines Ableiters**
Method and device for unloading a series capacitor of a controlled series compensator according to the load of its protection shunt
Procédé et dispositif de delestage d'un condensateur dans un compensateur série commandé en fonction de la charge de son shunt de protection

(43) Veröffentlichungstag der Anmeldung: 01.12.1993
(73) Patentinhaber: SIEMENS AKTIENGESELLSCHAFT, D-80333 München (DE)
(72) Erfinder: Unterlass, Franz, W-8555 Adelsdorf (DE); Weiss, Stephan, Dipl.-Ing., W-8525 Uttenreuth (DE)

(56) Entgegenhaltungen:
- WO-A-87/04538
- IEEE TRANSACTIONS ON POWER DELIVERY Bd. 4, Nr. 2, April 1989, NEW YORK US Seiten 1369 - 1378 M. ADOLFSON ET AL. 'EHV Series capacitor Banks . A New Approach To Platform To Ground Signalling Relay Protection And Supervision'
- ELEKTRIE Bd. 45, Nr. 3, März 1991, BERLIN , DE Seiten 88 - 90 G. THUMM ET AL. 'Geregelte Parallel- und Reihenkompensation'
- PESC 91 RECORD 22nd Annual IEEE Power Electronics Specialists Conference, Boston,US June 1991 B. Ooi et al. Series- Type solid-State Var Compensator Seiten 3-9

## Beschreibung

Die Erfindung bezieht sich auf ein Verfahren und eine Vorrichtung zur Entlastung eines Kondensators eines gesteuerten Serienkompensators, dem ein Zweig, bestehend aus einer Spule und einem Stromrichterventil, und als Ableiter ein nichtlinearer Widerstand elektrisch parallel geschaltet sind, in Abhängigkeit der Belastung seines Ableiters beim Auftreten stromstarker Leitungsfehler.

Bei der Reihenkompensation werden üblicherweise Kondensatoren im Leitungszug eingesetzt, um den stromabhängigen Spannungsabfall auf der Leitung und den Übertragungswinkel in Stufen zu vermindern. Es handelt sich dabei um Kondensatorbänke, die als Ganzes oder in mehreren Teilkondensatoren (Segmenten) in Reihe zu- und abgeschaltet werden. Das Zu- und Abschalten des Kondensators geschieht dadurch, daß ein paralleler Leistungsschalter geöffnet bzw. geschlossen wird. Der Schutz des Kondensators bei Netzkurzschluß wird durch einen parallelen Ableiter, durch eine triggerbare Funkenstrecke und/oder durch den parallelen Leistungsschalter gewährleistet.

Des weiteren ist eine Reihenkompensationsanlage bekannt, bei der durch eine zum Kondensator parallel geschaltete Drossel die Gesamtimpedanz dieses Reihenkompensators (ähnlich wie beim TCR (Thyristor controlled reactor) im statischen Kompensator) mit einem Stromrichterventil auf Hochspannungspotential stufenlos geregelt wird durch entsprechendes Zünden. Ein derartiger gesteuerter Serienkompensator ist bekannt unter dem Begriff ASC (advanced series compensation). Mit einem derartigen gesteuerten Serienkompensator kann die Dynamik der Reihenkompensation verbessert werden und die Gesamtimpedanz ist in einem gewissen Bereich regelbar, wobei die Impedanz von kapazitiv bis induktiv verändert werden kann.

Derartige Reihenkompensatoren sind im Aufsatz "Geregelte Parallel- und Reihenkompensation", abgedruckt in der DE-Zeitschrift "Elektrie", Band 45, 1991, März, Seiten 88 bis 90, vorgestellt. Außerdem ist ein derartiger gesteuerter Reihenkompensator, der in eine Übertragungsleitung integriert ist, in der internationalen Patentschrift WO 87/04538 beschrieben.

Ein wesentlicher Bestandteil zum Schutz des Reihenkondensators des gesteuerten Serienkompensators sind nichtlineare Widerstände, auch Ableiter genannt, beispielsweise MOV (Metalloxid-Varistor), die elektrisch parallel zum Reihenkondensator geschaltet sind. Diese Ableiter werden so dimensioniert, daß sie bei einer bestimmen Spannungshöhe sehr schnell die Stromführung übernehmen und somit den Reihenkondensator vor länger andauernden Überlastzuständen schützen.

Ihr Energieaufnahmevermögen ist aufgrund wirtschaftlicher Überlegungen natürlich begrenzt und somit benötigt eine Reihenkompensationsanlage auch die Möglichkeit, einen parallelen Nebenweg (Bypass) schnell zu schließen, um den Reihenkondensator und den Ableiter vor Überlast zu schützen. Dieser Bypass weist einen Leistungsschalter oder eine Funkenstrecke und einen Dämpfungskreis auf. Dieser Dämpfungskreis hat die Aufgabe, Entlastungsvorgänge, die bei Leitungsfehlern nach Schließen des Bypasses auftreten können, zu dämpfen.

Aus dem Aufsatz "EHV Series Capacitor Banks. A New Approach To Platform To Ground Signalling, Relay Protection And Supervision", abgedruckt in der Zeitschrift "IEEE Trans. on Power Delivery", Band 4, Nr. 2, April 1989, Seiten 1369 bis 1378, ist eine Überlastschutzeinrichtung für einen nichtlinearen Widerstand eines Serienkondensators in einer Hochspannungsleitung bekannt. Bei dieser Schutzeinrichtung wird in Abhängigkeit des Ableiterstromes die absolvierte Energie des nichtlinearen Widerstandes ermittelt. Mit Hilfe eines Ableiter-Modells wird die Kühlung des nichtlinearen Widerstandes ermittelt. Wird dabei ein Sollwert überschritten, so wird ein Signal generiert, wodurch der Reihenkondensator überbrückt wird.

Bisher müssen bei gesteuerten Reihenkompensationsanlagen für elektrische Hochspannungsleitungen die Reihenkompensationsanlagen bei stromstarken Fehlern überbrückt, d.h. abgeschaltet werden, um die dafür notwendigen installierten Betriebsmittel vor Überlastung zu schützen.

Jede Abschaltung des gesteuerten Reihenkompensators reduziert die Verfügbarkeit der Reihenkompensationsanlage und damit die Rentabilität dieser Anlage.

Der Erfindung liegt nun die Aufgabe zugrunde, ein Verfahren und eine Vorrichtung anzugeben, wodurch die Anzahl der notwendigen Abschaltungen bei einem eingangs genannten gesteuerten Serienkompensator wesentlich reduziert wird und dadurch die Verfügbarkeit wesentlich erhöht.

Diese Aufgabe wird erfindungsgemäß gelöst durch die Verfahrensschritte des Anspruchs 1 und durch die kennzeichnenden Merkmale des Anspruchs 4.

Die Ursache derartiger Abschaltungen sind stromstarke Leitungsfehler, die ausreichend schnell erkannt werden müssen. Dieser stromstarke Leitungsfehler ist das wesentliche Kriterium.

Der Leitungsstrom einer geregelten reihenkompensierten Leitung ist dazu nicht geeignet, da der Störabstand bei Leitungsfehlern keine schnelle und eindeutige Aussage über die Belastung des Ableiters zuläßt. Auch die Kondensatorspannung und der Kondensatorstrom einer geregelten reihenkompensierten Leitung ist ebensowenig geeignet, da sie ebenfalls nicht sinusförmig sein können und dadurch sind beide Signale nicht schnell und nicht einfach beschreib- und auswertbar.

Durch das erfindungsgemäße Verfahren zur Ermittlung des Ableiter-Temperaturgradienten mittels eines gemessenen Istwertes des Stromes durch den Ableiter, hat man ein Maß für die Belastung des Ableiters bei stromstarken Leitungsfehlern. Dieser Ableiter-Temperaturgradient kann außerdem schnell und genau verarbeitet werden, wodurch in Abhängigkeit einer erhöhten Belastung des Ableiters ein Steuersignal zur Verfügung steht, das eine Steuereinrichtung für das Stromrichterventil der steuerbaren Induktivität derart beeinflußt, daß die Steuereinrichtung ein Steuersignal mit einem Steuerwinkel α = 90° el. aussendet. Dadurch wird die wirksame Gesamtimpedanz des gesteuerten Reihenkompensators schnell von kapazitiv und Richtung induktiv geändert. Somit ist die Übertragungsleitung elektrisch verlängert worden, wodurch sich der stromstarke Leitungsfehler reduziert. Infolge der Reduzierung des stromstarken Leitungsfehlers wird der Kondensator und der Ableiter nicht mehr so sehr belastet, so daß keine Abschaltung der Kompensationsanlage erfolgen muß.

Da mittels des erfindungsgemäßen Verfahrens jederzeit die Belastung des Ableiters aus einer Strommessung zur Verfügung steht, kann diese nun derartig ausgewertet werden, daß bei Überschreiten einer zulässigen Belastung die gesteuerte Serienkompensationsanlage derart betrieben wird, daß ihre Gesamtimpedanz schnell von kapazitiv in Richtung induktiv abgeändert wird. Dadurch reduziert sich die Anzahl der notwendigen Abschaltungen der gesteuerten Serienkompensationsanlage, wodurch sich die Verfügbarkeit erheblich erhöht.

Bei der Erfassung einer erhöhten Belastung des Ableiters, infolge eines Überstromes bzw. eines Kurzschlusses, wird ein Steuersignal generiert, das dem Steuersatz des Stromrichterventils des gesteuerten Serienkompensators zugeführt wird, wodurch das Stromrichterventil mit einem Steuerwinkel α= 90° el. angesteuert wird. Dies hat zur Folge, daß sich die Gesamtimpedanz von kapazitiv zu induktiv ändert, wodurch der Überstrom bzw. Kurzschlußstrom in Abhängigkeit der Induktivität der gesteuerten Spule begrenzt bzw. reduziert wird.

Vorteilhafte Ausgestaltungen des Verfahrens und der Vorrichtung sind den Unteransprüchen zu entnehmen.

Zur weiteren Erläuterung des erfindungsgemäßen Verfahrens und der erfindungsgemäßen Vorrichtung zur Entlastung des Kondensators eines gesteuerten Serienkompensators in Abhängigkeit der Belastung seines Ableiters wird auf die Zeichnung Bezug genommen, in der ein Ausführungsbeispiel einer erfindungsgemäßen Vorrichtung schematisch veranschaulicht ist.
- Figur 1: zeigt einen gesteuerten Serienkompensator mit einem Blockschaltbild der Vorrichtung zur Entlastung des Kondensators, in
- Figur 2: ist der nähere Aufbau der Auswerteeeinrichtung der Einrichtung zur Generierung eines Steuersignals nach Figur 1 als Blockschaltbild dargestellt, in den
- Figuren 3 und 6: ist jeweils in einem Diagramm über der Zeit t der Leiterstrom dargestellt, die
- Figuren 4 und 7: zeigen jeweils in einem Diagramm über der Zeit t die Kompensatorspannung des Serienkompensators, die
- Figur 8: veranschaulicht in einem Diagramm über der Zeit t den Verlauf des Ventilstromes und die

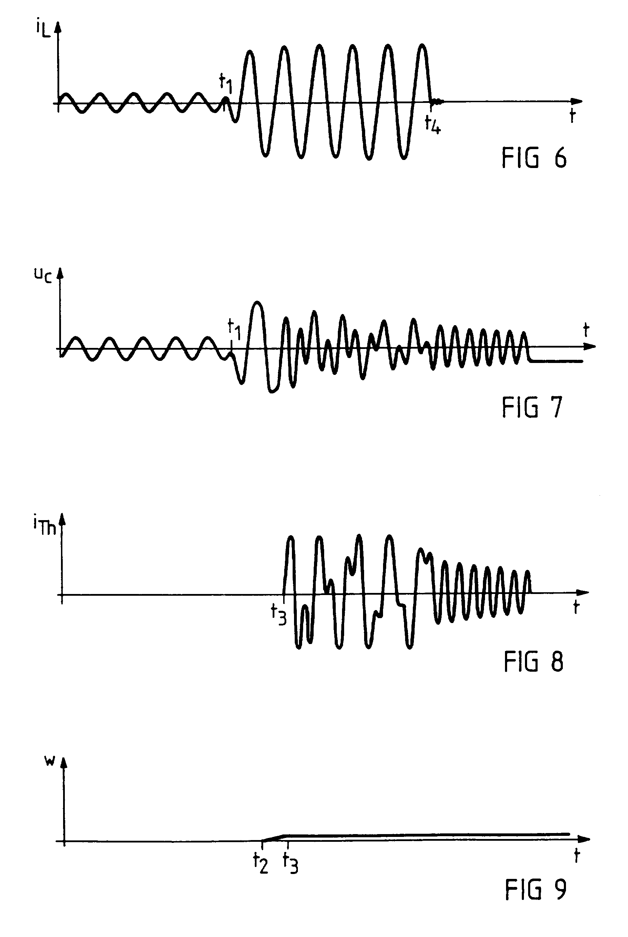

- Figuren 5 und 9: zeigen jeweils in einem Diagramm über der Zeit t die vom Ableiter aufgenommene Energie.

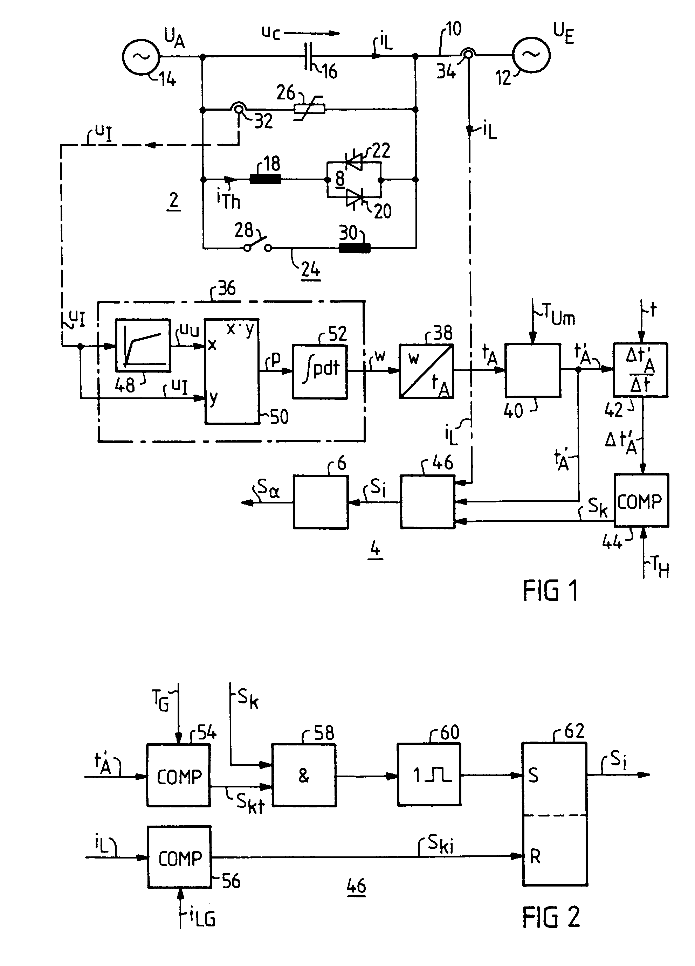

Die Figur 1 zeigt ein Ersatzschaltbild eines gesteuerten Serienkompensators 2 mit einer Einrichtung 4 zur Generierung eines Steuersignals Sᵢ, das als Blockschaltbild dargestellt ist. Die Einrichtung 4 ist ausgangsseitig mit einem Signalumsetzer 6 verknüpft, der einem nicht näher dargestellten Steuersatz ein Zündwinkelsignal S_{α} liefert, wobei der Steuersatz für eine zeitsynchrone Ansteuerung des Stromrichterventils 8 des gesteuerten Serienkompensators 2 sorgt. Der gesteuerte Serienkompensator 2, der auch als ASC (advenced series compensation) bekannt ist, ist als Reihenwiderstand in einer Übertragungsleitung 10 eingeschaltet. Dies geschieht in den meisten Fällen im Zuge der Leitung 10, erfolgt aber auch am Ausgang bzw. Eingang von Schaltstationen. Am Leitungsanfang und am Leitungsende sind jeweils Spannungsquellen 12 und 14 angegeben, deren Spannungen U_{E} und U_{A} sich in der Amplitude um einen Leitungsspannungsabfall ΔU unterscheiden und in einem Spannungsverdrehwinkel or phasenverschoben sind. Die Spannung U_{A} am Leitungsanfang wird auch als sendende Spannung U_{A} und die Spannung U_{E} am Leitungsende wird auch als Verbraucherspannung U_{E} bezeichnet.

Der Aufbau einer gesteuerten Serienkompensationsanlage 2 kann in drei Bereiche unterteilt werden. Der Kern einer solchen Anlage 2 besteht aus einem Kondensator 16, welcher in die Übertragungsleitung 10 seriell integriert ist. Hiermit erreicht man eine Kompensation der induktiven Längsimpedanz der Leitung 10, welche für den induktiven Blindleistungsanteil verantwortlich ist. Parallel wird bei einer gesteuerten Serienkompensationsanlage 2 ein Zweig, bestehend aus einer Spule 18 und einem Stromrichterventil 8, hinzugeschaltet. Als Stromrichterventil 8 ist eine Parallelschaltung zweier Thyristoren 20 und 22 dargestellt, die antiparallel zueinander angeordnet sind. Mittels dieser beiden Thyristoren 20 und 22 kann die Spule 18 zu vorbestimmten Zeitpunkten für die positive und negative Halbwelle der Kondensatorspannung eingeschaltet werden. Anstelle der Thyristoren 20 und 22 können auch andere Halbleiterventile, beispielsweise GTO-Thyri-storen (Gate-turn-off-Thyristoren) verwendet werden. Mittels dieses Zweiges besteht die Möglichkeit, durch eine Phasenanschnittsteuerung die wirksame Impedanz des gesteuerten Serienkompensators 2 kontinuierlich kapazitiv und induktiv zu verändern. Dadurch kann man neben der Erhöhung der Übertragungsleistung auch noch im Fehlerfall auf der Leitung 10 einen Kurzschlußstrom begrenzen. Die aufgezählten Vorteile beim Einsatz von Reihenkondensatoren, die im Lehrbuch "Reihenkondensatoren in elektrischen Netzen", von Dr.-Ing. Leonhard Müller, 1967, Seite 4, gelten auch für einen gesteuerten Serienkompensator 2.

Zum Schutz des Kondensators 16, der Spule 18 und ces Stromrichterventils 8 vor Überlastungen durch zu hohe Leitungsströme i_{L} sind parallel zu diesen Elementen 16 oder 18 und 8 ein Nebenweg 24 (Bypass) und ein nichtlinearer Widerstand 26, auch Ableiter genannt, eingebaut. Als nichtlinearer Widerstand 26 ist beispielsweise ein Metalloxid-Varistor (MOV) vorgesehen. Dieser elektrisch parallel zum Serienkondenscitor 16 geschaltete Metalloxid-Varistor 26 ist so dimensioniert, daß bei einer vorbestimmten Spannungsamplitude dieser Ablieter 26 sehr schnell die Stromführung übernimmt und somit den Reihenkondensator 16 vor länger andauernden Überlastzuständen schützt. Das Energieaufnahmevermögen eines nichtlinearen Widerstandes 26 ist aufgrund wirtschaftlicher Überlegungen natürlich begrenzt und somit benötigt eine Serienkompensationsanlage 2 auch die Möglichkeit, den Serienkondensator 16 mit seinem Ableiter 26 vor Überlastungen zu schützen. Diese Aufgabe wird von dem parallelen Nebenweg 24 übernommen. Dieser Bypass 24 besteht aus einem Bypass-Schalter 28 und aus einem Dämpfungskreis 30. Anstelle des Bypass-Schalters 28 kann auch eine triggerbare Funkenstrecke oder eine Kombination aus beiden vorgesehen sein. Der Bypass-Schalter 28 wird geschlossen, sobald die Belastung, d.h. das Energieaufnahmevermögen des Ableiters 26, erschöpft ist.

Mittels einer Einrichtung 32 wird der Istwert des Stromes u_{I} durch den Ableiter 26 ermittelt und mittels einer Einrichtung 34 wird der Istwert des Leitungsstromes i_{L} in der Leitung 10 gemessen. Diese Systemgrößen u_{I} und i_{L} werden über ein Lichtleitersystem potentialfrei von der auf Hochpotential befindlichen Anlage 2 zur Einrichtung 4 zur Generierung eines Steuersignals Sᵢ geführt, die auf Erdpotential ist. Diese potentialfreie Übertragung der Systemgrößen u_{I} und i_{L} sind einerseits durch eine unterbrochene Linie und andererseits durch eine Punkt-Strich-Linie dargestelt.

Die Einrichtung 4 zur Generierung eines Steuersignals Sᵢ weist eingangsseitig eine Einrichtung 36 zur Ermittlung der Belastung des Ableiters 26 auf, die ausgangsseitig mit einer Umrechnungseinrichtung 38 verknüpft ist. Diese Umrechnungseinrichtung 38 ist über ein Ableiter-Modell 40 mit einem Differenzierer 42 verbunden, der ausgangsseitig über einen Komparator 44 mit einer Auswerteeinrichtung 46 verknüpft ist. Am Ausgang dieser Auswerteeinrichtung 46 steht das Steuersignal Sᵢ an, das dem Steuersatz 6 des Stromrichterventils 8 zugeführt wird.

Die Einrichtung 36 zur Ermittlung der Belastung des Ableiters 26 rechnet aus dem Istwert des Stromes u_{I} durch den Ableiter 26, der als stromproportionale Spannung zur Verfügung steht, für jeden Augenblickswert entsprechend einer U/I-Kennlinie des Ableiters 26 eine Ableiterleistung p aus. Dazu enthält die Einrichtung 36 eingangsseitig einen Kennliniengeber 48, dem eine Recheneinrichtung 50 nachgeschaltet ist, an dessen zweitem Eingang der Istwert des Stromes u_{I} durch den Ableiter 26 ansteht. Am Ausgang dieser Recheneinrichtung 50 steht die berechnete Ableiterleistung p zur Verfügung, aus der mittels eines Integrierers 52 die vom Ableiter 26 aufgenommene Energie w ermittelt wird. Somit kann mittels dieser Einrichtung 36 aus dem Istwert des Stromes u_{I} durch den Ableiter 26 für jeden Augenblick für die vom Ableiter 26 aufgenommene Energie w berechnet werden.

Mittels der Umrechnungseinrichtung 38 wird die aufgenommene Energie w in eine Ableitertemperatur t_{A} umgerechnet. Zwischen der absorbierten Energie w des Ableiters 26 und der Ableitertemperatur t_{A} besteht ein Zusammenhang, der durch Materialkonstanten (Energieaufnahmevermögen des Materials in J/cm³ = Ws/cm³) und Ableiteraufbau (räumlicher Aufbau/Volumen in cm³) gegeben ist. Anhand der ableiterspezifischen Daten kann aus der absorbierten Energie w die zugehörige Ableitertemperatur t_{A} ermittelt werden.

Diese genügend genaue Ableitertemperatur t_{A} wird im nachgeschalteten Ableiter-Modell 40, genauer gesagt im thermischen Modell des Ableiters 26, in Abhängigkeit von thermischen Kapazitäten und thermischen Übergangswiderständen unter Berücksichtigung der Umgebungstemperatur T_{Um} korrigiert. Diese korrigierte Temperatur t'_{A} gibt die tatsächliche Ableitertemperatur t'_{A} des belasteten Ableiters 26 wieder. Diese ermittelte Ableitertemperatur t'_{A} stellt ein Maß der Belastung des Ableiters 26 und damit des Serienkondensators 16 der gesteuerten Serienkompensationsanlage 2 dar.

Um wirksam gegen eine zu hohe Belastung der gesteuerten Serienkompensationsanlage 2 Maßnahmen ergreifen zu können, muß diese Ableitertemperatur t'_{A} möglichst ausreichend schnell und genau verarbeitet werden. Dazu wird zunächst aus den Ableitertemperaturwerten t_{A} der Ableitertemperaturgradient Δ t'_{A} ermittelt. Dies geschieht mit dem Differenzierer 42, der aus den Ableitertemperaturwerten t'_{A} und Zeitspannen Δt den Temperaturgradienten Δ t'_{A} ermittelt. Als Differenzierer 42 kann beispielsweise ein Schieberegister mit hinreichender Anzahl von Speicherzellen und ausreichend schneller Verarbeitungsgeschwindigkeit vorgesehen sein. Der Ableitertemperaturgradient Δ t'_{A} ist ein Maß für die stoßartige Belastung des Ableiters 26 bei stromstarken Leitungsfehlern.

Der nachgeschaltete Komparator 44 erzeugt ein Binärsignal S_{K}, beispielsweise High-Pegel, falls der Ableitertemperaturgradient Δt'_{A} einen vorbestimmten Grenzwert T_{H} überschreitet. Als Grenzwert T_{H} wird ein Wert gewählt, der einen bestimmten Temperaturhub entspricht. Dieser Temperaturhub muß mit hinreichend großer Genauigkeit auf einen stromstarken Leitungsfehler schließen lassen.

In der nachgeschalteten Auswerteeinrichtung 46, deren Blockschaltbild in Figur 2 näher dargestellt ist, wird die Ableitertemperatur t'_{A}, der Istwert des Leitungsstromes i_{L} und das Binärsignal S_{K} des Komparators 44 verarbeitet. Eingangsseitig weist diese Auswerteeinrichtung 46 für die Ableitertemperatur t'_{A} und den Istwert des Leitungsstromes i_{L} jeweils einen Komparator 54 und 56 auf. Der Komparator 54 vergleicht die Ableitertemperatur t'_{A} mit einer oberen Ableitertemperatur T_{G} derart, daß, solange die Ableitertemperatur t'_{A} kleiner ist als diese Absolutableitertemperatur T_{G}, das generierte Komparatorsignal S_{Kt} am Ausgang des Komparators 52 einen High-Pegel aufweist. Dieses Komparatorsignal S_{Kt} wird einem Eingang eines nachgeschalteten UND-Gatters 58 zugeführt, an dessem anderen Eingang das Komparatorsignal S_{K} des Komparators 44 ansteht. Das UND-Gatter 58 ist ausgangsseitig mit einem Zeitschalter 60 verbunden. Dieser Zeitschalter 60 wird auch als monostabile Kippschaltung, Monoflop, Univibrator oder als Oneshot bezeichnet. Diese Schaltung schaltet sich nach einem Eingangssignal für eine vorbestimmte Zeitspanne ein und kippt dann wieder in den Ruhezustand zurück. Dieser Zeitschalter 60 ist ausgangsseitig mit dem Set-Eingang S eines RS-Flip-Flops 62 verknüpft. Der Reset-Eingang R dieses RS-Flip-Flops 62 ist elektrisch leitend verbunden mit dem Ausgang des Komparators 56, der den Istwert des Leitungsstromes i_{L} mit einem Grenzwert i_{LG} derart vergleicht, daß, solange der Istwert des Leitungsstromes i_{L} größer ist als der Grenzwert i_{LG}, das generierte Komparatorsignal S_{Ki} einen Low-Pegel aufweist, d.h., der stromstarke Leitungsfehler ist noch vorhanden. Da der Set-Eingang S des RS-Flip-Flops 62 dominant ist, bewirkt ein High-Signal am Reset-Eingang R erst nach Ablauf der am Zeitschalter 60 eingestellten Zeit, beispielsweise 2 Sekunden, ein Rücksetzen des RS-Flip-Flops 62. Solange am Set-Eingang S des RS-Flip-Flops 62 ein High-Pegel ansteht, weist das Steuersignal Sᵢ ebenfalls einen High-Pegel auf.

Dieses Steuersignal Sᵢ bewirkt im Steuersatz 6, daß der Steuerwinkel α von einem Wert 90° << α < 180° el. auf α = 90° el. gesetzt wird, wodurch die Gesamtimpedanz des gesteuerten Serienkompensators 2 von kapazitiv schnell in Richtung induktiv gesteuert wird. Dadurch wird die Leitung 10 elektrisch verlängert, wodurch der stromstarke Leitungsfehler vermindert wird. Durch diese Verminderung des stromstarken Leitungsfehlers wird der Serienkondensator 16 des gesteuerten Serienkompensators 2 und sein Ableiter 26 weniger belastet, wodurch eine notwendige Abschaltung mittels des Bypasses 24 überflüssig ist.

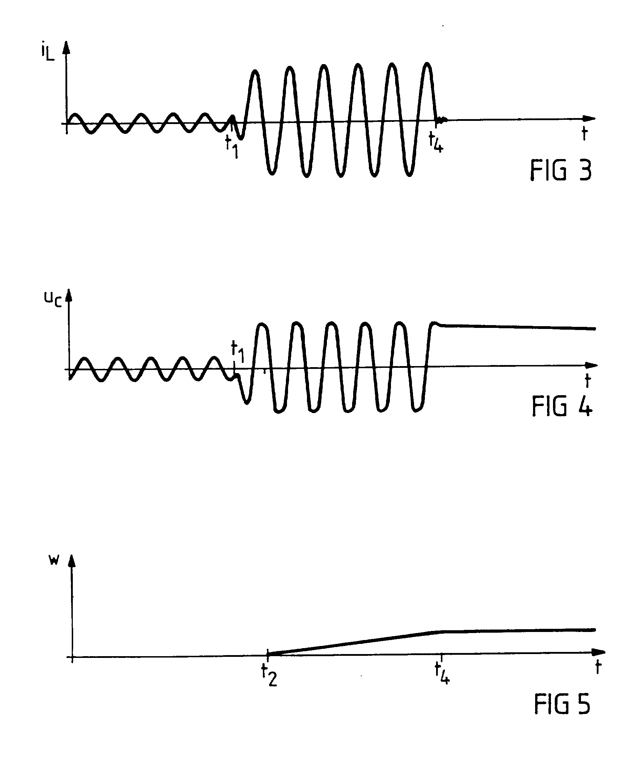

In den Figuren 3 und 6 ist jeweils in einem Digramm über der Zeit t der Verlauf des Leitungsstromes i_{L} dargestellt. Zum Zeitpunkt t₁ tritt ein stromstarker Leitungsfehler auf, erkennbar durch die sprunghafte Erhöhung der Amplitude des Leitungsstromes i_{L}.

In den Figuren 4 bzw. 7 ist in einem Diagramm über der Zeit t der Verlauf der zugehörigen Kondensatorspannung u_{c} dargestellt, wobei die Figur 4 den Verlauf ohne und die Figur 7 den Verlauf mit dem Einsatz des erfindungsgemäßen Verfahrens darstellt. Dies ist im Verlauf der Kondensatorspannung u_{c} gemäß Diagramm nach Figur 4 auch daran zu erkennen, daß die Kappen der Kondensatorspannung u_{c} verformt sind. Diese Verformung tritt auf, wenn der Ableiter 26 bei einer bestimmten Spannungshöhe sehr schnell die Stromführung übernimmt. Daß der Ableiter 26 periodisch die Stromführung übernimmt, kann man dem Diagramm gemäß Figur 5 entnehmen, in dem die absorbierte Energie w des Ableiters 26 über der Zeit t dargestellt ist. Diese absorbierte Energie w wächst mit jeder Stromführung an. Zum Zeitpunkt t₄ hat die Energie w einen Wert erreicht, bei dem der Bypass 24 geschlossen wird und somit der Serienkondensator 16 und sein paralleler Ableiter 26 kurzgeschlossen wird (Ausfall der gesteuerten Serienkompensationsanlage 2).

Der Figur 7 kann entnommen werden, daß der Ableiter 26 innerhalb einer Periode der Kondensatorspannung u_{c} zweimal kurzzeitig die Stromführung übernimmt, wodurch die aufgenommene Energie w des Ableiters 26 ansteigt. Zum Zeitpunkt t₃ ist der Grenzwert T_{H} des Ableitertemperaturgradienten Δt'_{A} überschritten, wodurch das Komparatorsignal S_{K} vom Low-Zustand zum High-Zustand wechselt. Durch diesen Zustandswechsel wird mittels der Auswerteeinrichtung 46 ein Steuersignal Sᵢ erzeugt, das im Steuersatz den Steuerwinkel auf α = 90° el. setzt, wodurch das Stromrichterventil 8 derart angesteuert wird, daß die Ersatzimpedanz des gesteuerten Serienkompensators 2 schnell von kapazitiv in Richtung induktiv verändert wird (Figur 8). Dies kann man am Verlauf der Kondensatorspannung u_{c} daran erkennen, daß nach einem Einschwingvorgang die Amplitude der Kondensatorspannung u_{c} im Vergleich zu Beginn des stromstarken Leitungsfehlers ungefähr halbiert ist und ein periodischer Strom i_{Th} durch diese Spule 18 und das Stromrichterventil 8 fließt (Figur 8). Außerdem kann dem Diagramm gemäß Figur 9 entnommen werden, daß die aufgenommene Energie w des Ableiters 26 konstant bleibt. Zum Zeitpunkt t₄ ist durch das erfindungsgemäße Verfahren der stromstarke Leitungsfehler so sehr reduziert, daß eine Abschaltung nicht erforderlich ist (Verlauf Kondensatorspannung u_{c} und Verlauf Thyristorstrom i_{Th}).

Mittels dieses erfindungsgemäßen Verfahrens und der erfindungsgemäßen Vorrichtung, wobei die Einrichtung 4 zur Generierung eines Steuersignals Sᵢ in einer vorteilhaften Ausführungsform ein Mikroprozessor ist, wird erreicht, daß die Anzahl der notwendigen Abschaltungen erheblich reduziert werden. Dadurch erhöht sich wesentlich die Verfügbarkeit dieser gesteuerten Serienkompensationsanlage 2. Bei einer Anlage 2 ohne die Vorrichtung zur Durchführung des erfindungsgemäßen Verfahrens muß infolge des Betätigen des Bypasses 24 für den Serienkondensator 16 eine Ruhezeit nach Überlastung von beispielsweise 30 Minuten und eine Abkühlzeit für den Ableiter 26 von beispielsweise 2 Stunden eingehalten werden. Während dieser Totzeiten kann die installierte Anlage 2 ihre funktionsgemäße Arbeit nicht durchführen.

Das erfindungsgemäße Verfahren benutzt nur den Strom u_{I} der durch den Ableiter 26 fließt, wobei diese Istwert u_{I} für jeden Augenblick ausreichend schnell aufbereitet und ausgewertet werden. Wesentlich dabei ist die Ermittlung des Ableitertemperaturgradienten Δ t'_{A}, der ein Maß für die stoßartige Belastung des Ableiters 26 bei stromstarken Leitungsfehlern ist.

## Patentansprüche

1. Verfahren zur Entlastung eines Kondensators (16) eines gesteuerten Serienkompensators (2), dem ein Zweig, bestehend aus einer Spule (18) und einem Stromrichterventil (8), und als Ableiter ein nichtlinearer Widerstand (26) elektrisch parallel geschaltet sind, in Abhängigkeit der Belastung seines Ableiters (26) beim Auftreten stromstarker Leitungsfehler mit folgenden Verfahrensschritten:
a) Ermittlung des Istwertes des Stromes (u_{I}) durch den Ableiter (26) des gesteuerten Serienkompensators (2),
b) Ermittlung der Belastung des Ableiters (26) in Form der aufgenommenen Energie (w) aus dem ermittelten Istwert des Stromes (u_{I}) durch den Ableiter (26),
c) Umwandlung des Wertes dieser aufgenommenen Energie (w) in einen Temperaturwert (t_{A}) des Ableiters (26),
d) Korrektur dieses Temperaturwertes (t_{A}) des Ableiters (26) mittels eines Ableiter-Modells (40),
e) Ermittlung des Ableitertemperaturgradienten (Δt'_{A}) mittels des korrigierten Ableitertemperaturwertes (t'_{A}) und einer Zeitspanne (Δt)
f) Ermittlung eines Binärsignals (S_{K}) in Abhängigkeit dieses ermittelten Ableitertemperaturgradienten (Δt'_{A}) in Bezug auf einen vorgebbaren Temperaturgradienten-Grenzwert (T_{H}) und
g) Generierung eines Steuersignals (Sᵢ) in Abhängigkeit des ermittelten Istwertes des Leitungsstromes (i_{L}), des korrigierten Ableitertemperaturwertes (t'_{A}) und des ermittelten Binärsignals (S_{K}), wodurch eine zuschaltbare Spule (18) des gesteuerten Serienkompensators (2) parallel zum Kondensator (16) dieses gesteuerten Serienkompensators elektrisch parallel geschaltet wird.

2. Verfahren nach Anspruch 1, **dadurch gekennzeichnet**, daß zur Berechnung der aufgenommenen Energie (w) des Ableiters (26) fortlaufend aus dem ermittelten Istwert des Stromes (u_{I}) durch den Ableiter (26) entsprechend einer U/I-Kennlinie des Ableiters (26) seine Leistung (p) berechnet wird, aus der sich mittels Integration die aufgenommene Energie (w) ergibt.

3. Verfahren nach Anspruch 1, **dadurch gekennzeichnet**, daß das Steuersignal (Sᵢ) genau dann mindestens für eine vorbestimmte Zeitdauer generiert wird, wenn der ermittelte Ableitertemperaturgradient (Δt'_{A}) einen vorbestimmten Grenzwert (T_{H}) überschritten hat und der ermittelte korrigierte Ableitertemperaturwert (t'_{A}) kleiner ist als ein vorbestimmter Grenzwert (T_{G}), wobei ein Absinken des Istwertes (i_{L}) des Leitungsstromes unterhalb eines vorgegebenen Grenzwertes (i_{LG}) nach Ablauf der vorbestimmten Zeitdauer das Steuersignal (Sᵢ) zurücksetzt.

4. Vorrichtung zur Durchführung des Verfahrens zur Entlastung eines Kondensators (16) eines gesteuerten Serienkompensators (2), dem ein Zweig, bestehend aus einer Spule (18) und einem Stromrichterventil (8), und als Ableiter ein nichtlinearer Widerstand (26) elektrisch parallel geschaltet sind, in Abhängigkeit der Belastung seines Ableiters (26) beim Auftreten stromstarker Leistungsfehler nach Anspruch 1, wobei elektrisch in Reihe zum Ableiter (26) eine Stromerfassungseinrichtung (32) geschaltet ist, die ausgangsseitig mit einer Einrichtung (4) zur Generierung eines Steuersignals (Sᵢ) verknüpft ist, die eine Einrichtung (36) zur Ermittlung der Belastung des Ableiters (26) enthält, wobei diese Einrichtung (36) ausgangsseitig über eine Einrichtung (38) zur Umrechnung der absorbierten Energie (w) des Ableiters (26) in eine Ableitertemperatur (t_{A}) und ein Ableiter-Modell (40) zur Bestimmung der tatsächlichen Ableitertemperatur (t'_{A}) mit einer Einrichtung (42) zur Bestimmung eines Temperaturgradienten (Δt'_{A}) verbunden ist, und diese Einrichtung (42) ausgangsseitig über eine Grenzwertüberwachungseinrichtung (44), an deren zweitem Eingang ein Grenzwert (T_{H}) ansteht, mit einer Auswerteeinrichtung (46) verknüpft ist, die eingangsseitig außerdem mit dem Ausgang des Ableiter-Modells (40) und ausgangsseitig mit einem Steuersatz (6) für das Stromrichterventil (8) verbunden ist, und wobei an einem zweiten Eingang des Ableiter-Modells (40) die Umgebungstemperatur (T_{Um}) und an einem zweiten Eingang der Einrichtung (42) zur Bestimmung des Temperaturgradienten (Δt'_{A}) ein Zeitsignal (t) ansteht.

5. Vorrichtung nach Anspruch 4, **dadurch gekennzeichnet**, daß die Elemente (36,38,40,42, 44,46) der Einrichtung (4) zur Generierung des Steuersignals (Sᵢ) elektrisch in Reihe geschaltet sind, wobei die Auswerteeinrichtung (46) eingangsseitig noch mit dem Ausgang des Ableiter-Modells (40) und mit dem Ausgang einer Leiterstromerfassungseinrichtung (34) verknüpft ist.

6. Vorrichtung nach Anspruch 4, **dadurch gekennzeichnet**, daß die Einrichtung (36) zur Ermittlung der Belastung des Ableiters (26) eingangsseitig einen Kennliniengeber (48) aufweist, der ausgangsseitig mit einer Recheneinrichtung (50) versehen ist, dem ein Integrator (52) nachgeschaltet ist, wobei das Eingangssignal (u_{I}) einerseits dem Kennliniengeber (48) und andererseits einem zweiten Eingang der Recheneinrichtung (50) zugeführt ist.

7. Vorrichtung nach Anspruch 4, **dadurch gekennzeichnet**, daß als Einrichtung (4) zur Generierung des Steuersignals (Sᵢ) ein Mikrocomputer vorgesehen ist.

## Claims

1. Method for unloading a capacitor (16) of a controlled series compensator (2), with which there are connected electrically in parallel a branch, consisting of a coil (18) and a converter valve (8), and as diverter a non-linear resistor (26), in dependence upon the loading of its diverter (26) with the occurrence of strong-current line faults, having the following procedural steps:
a) determination of the actual value of the current (u_{I}) through the diverter (26) of the controlled series compensator (2);
b) determination of the loading of the diverter (26) in the form of the absorbed energy (w) from the determined actual value of the current (u_{I}) through the diverter (26);
c) conversion of the value of this absorbed energy (w) into a temperature value (t_{A}) of the diverter (26);
d) correction of this temperature value (t_{A}) of the diverter (26) by means of a diverter model (40);
e) determination of the diverter temperature gradient (Δt'_{A}) by means of the corrected diverter temperature value (t'_{A}) and a period (Δt);
f) determination of a binary signal (S_{K}) in dependence upon this determined diverter temperature gradient (Δt'_{A}) with respect to a specifiable temperature gradient limiting value (T_{H}); and
g) generation of a control signal (Sᵢ) in dependence upon the determined actual value of the conduction current (i_{L}), the corrected diverter temperature value (t'_{A}) and the determined binary signal (S_{K}), whereby a connectable coil (18) of the controlled series compensator (2) parallel with the capacitor (16) of this controlled series compensator is connected electrically in parallel.

2. Method according to claim 1, characterized in that to calculate the absorbed energy (w) of the diverter (26) continuously from the determined actual value of the current (u_{I}) through the diverter (26) corresponding to a U/I-characteristic of the diverter (26) its output (p) is calculated, from which the absorbed energy (w) results by means of integration.

3. Method according to claim 1, characterized in that the control signal (Sᵢ) is generated at least for a predetermined duration precisely when the determined diverter temperature gradient (Δ t'_{A}) has exceeded a predetermined limiting value (T_{H}) and the determined corrected diverter temperature value (t'_{A}) is smaller than a predetermined limiting value (T_{G}), whereby a lowering of the actual value (i_{L}) of the conduction current below a specified limiting value (i_{LG}) after the end of the predetermined duration resets the control signal (Sᵢ).

4. Device for carrying out the method for unloading a capacitor (16) of a controlled series compensator (2), with which there are connected electrically in parallel a branch, consisting of a coil (18) and a converter valve (8), and as diverter a non-linear resistor (26), in dependence upon the loading of its diverter (26) with the occurrence of strong-current output faults according to claim 1, with a current detection device (32) being connected electrically in series with the diverter (26), which device (32) is connected on the output side to a device (4) for generating a control signal (Sᵢ), which device (4) contains a device (36) for determining the loading of the diverter (26), with this device (36) being connected on the output side by way of a device (38) for converting the absorbed energy (w) of the diverter (26) into a diverter temperature (t_{A}) and a diverter model (40) to determine the actual diverter temperature (t'_{A}) with a device (42) for determining a temperature gradient (Δt'_{A}), and this device (42) being connected on the output side by way of a limiting-value monitoring device (44), at the second input of which there is a limiting value (T_{H}), to an evaluation device (46), which evaluation device is connected on the input side, moreover, to the output of the diverter model (40) and on the output side to trigger equipment (6) for the converter valve (8), and whereby at a second input of the diverter model (40) the ambient temperature (T_{Um}) is present and at a second input of the device (42) to determine the temperature gradient (Δt'_{A}) there is a time signal (t).

5. Device according to claim 4, characterized in that the elements (36, 38, 40, 42, 44, 46) of the device (4) for generating the control signal (Sᵢ) are connected electrically in series, with the evaluation device (46) still being connected on the input side to the output of the diverter model (40) and to the output of a conductor current detection device (34).

6. Device according to claim 4, characterized in that the device (36) for determining the loading of the diverter (26) has on the input side a characteristic transmitter (48), which is provided on the output side with a computing device (50) and downstream of which there is an integrator (52), with the input signal (u_{I}) being supplied on the one hand to the characteristic transmitter (48) and on the other hand to a second input of the computing device (50).

7. Device according to claim 4, characterized in that a microcomputer is provided as device (4) to generate the control signal (Sᵢ).

## Revendications

1. Procédé de décharge d'un condensateur (16) d'un compensateur série (2) commandé, en parallèle duquel sont branchées une branche constituée d'une bobine (18) et d'une valve (8) de convertisseur, et comme dérivation une résistance non linéaire (26), en fonction de la charge de sa dérivation (26) lorsqu'apparaissent des erreurs de courant dans un conducteur, comportant les étapes suivantes :
a) détermination de la valeur réelle du courant (u_{I}) passant dans la dérivation (26) du compensateur série commandé (2),
b) détermination de la charge de la dérivation (26) sous forme de l'énergie (w) absorbée à partir de la valeur réelle déterminée du courant (u_{I}) passant dans la dérivation (26),
c) transformation de la valeur de cette énergie absorbée (w) en une valeur (t_{A}) de température de la dérivation (26),
d) correction de cette valeur (t_{A}) de température de la dérivation (26) au moyen d'un modèle (40) de dérivation,
e) détermination du gradient (Δt'_{A}) de température de la dérivation au moyen de la valeur (t'_{A}) corrigée de la température de la dérivation et d'un laps de temps (Δt),
f) détermination d'un signal binaire (S_{K}) en fonction de ce gradient (Δt'_{A}) déterminé de température de la dérivation en référence à une valeur limite (T_{H}) pouvant être prescrite du gradient de température et
g) génération d'un signal (Sᵢ) de commande en fonction de la valeur réelle déterminée du courant (i_{L}) du conducteur, de la valeur (t'_{A}) corrigée de la température de la dérivation et du signal (S_{K}) binaire déterminé, ce qui branche électriquement en parallèle une bobine (18), pouvant être connectée, du compensateur série commandé (2) en parallèle avec le condensateur (16) de ce compensateur série commandé.

2. Procédé suivant la revendication 1, caractérisé en ce que pour calculer l'énergie (w) absorbée par la dérivation (26) on calcule en continu, à partir de la valeur réelle déterminée du courant (u_{I}) passant dans la dérivation (26) , en fonction d'une caractéristique U/I de la dérivation (26), sa puissance (p), à partir de laquelle on obtient, par intégration, l'énergie absorbée (w).

3. Procédé suivant la revendication 1, caractérisé en ce que l'on génère le signal (Sᵢ) de commande au moins pour une durée prescrite précisément lorsque le gradient (Δt'_{A}) déterminé de température de la dérivation est supérieur à une valeur limite (T_{H}) prescrite et que la valeur (t'_{A}) déterminée et corrigée de la température de la dérivation est plus petite qu'une valeur limite prescrite (T_{G}), une chute de la valeur réelle (i_{L}) du courant passant dans le conducteur sous une valeur limite (i_{LG}) prescrite remettant à l'état initial le signal (Sᵢ) de commande après que la durée prescrite est écoulée.

4. Dispositif destiné à mettre en oeuvre le procédé de décharge d'un condensateur (16) d'un compensateur série commandé (2), en parallèle duquel sont branchées une branche constituée d'une bobine (18) et d'une valve (8) de convertisseur et, comme dérivation, une résistance (26) non linéaire, en fonction de la charge de sa dérivation (26) lorsqu'apparaissent des erreurs de courant dans un conducteur, suivant la revendication 1, un dispositif (32) de détection de courant, qui est relié en sortie à un dispositif (4) destiné à la génération d'un signal (Sᵢ) de commande et comprenant un dispositif (36) de détermination de la charge de la dérivation (26), étant branché électriquement en série avec la dérivation (26), ce dispositif (36) étant relié en sortie par l'intermédiaire d'un dispositif (38), qui est destiné à calculer une température (t_{A}) de la dérivation à partir de l'énergie absorbée (w) de la dérivation (26), et par l'intermédiaire d'un modèle (40) de la dérivation destiné à déterminer la température (t'_{A}) effective de la dérivation, à un dispositif (42) de détermination d'un gradient (Δt'_{A}) de température, ce dispositif (42) étant relié en sortie par l'intermédiaire d'un dispositif (44) de contrôle de valeur limite, à la deuxième entrée duquel est appliquée une valeur limite (T_{H}), à un dispositif (46) d'exploitation, qui est relié en entrée en outre à la sortie du modèle (40) de la dérivation et en sortie à un organe (6) de commande de la valve (8) de convertisseur et la température ambiante (T_{Um}) étant appliquée à une seconde entrée du modèle (40) de la dérivation et un signal (t) de temps étant appliqué à une seconde entrée du dispositif (42) de détermination du gradient (Δt'_{A}) de température.

5. Dispositif suivant la revendication 4, caractérisé en ce que les éléments (36, 38, 40, 42, 44, 46) du dispositif (4) de génération du signal (Sᵢ) de commande sont branchés électriquement en série, le dispositif (46) d'exploitation étant relié en entrée à la sortie du modèle (40) de la dérivation et à la sortie d'un dispositif (34) de détection du courant dans le conducteur.

6. Dispositif suivant la revendication 4, caractérisé en ce que le dispositif (36) de détermination de la charge de la dérivation (26) comporte en entrée un générateur (48) de caractéristiques, qui est muni en sortie d'un dispositif (50) de calcul, en aval duquel est branché un intégrateur (52), le signal (u_{I}) d'entrée étant envoyé d'une part au générateur (48) de caractéristiques et d'autre part à une seconde entrée du dispositif (50) de calcul.

7. Dispositif suivant la revendication 4, caractérisé en ce qu'il est prévu un micro-ordinateur comme dispositif (4) de génération du signal (Sᵢ) de commande.
